# EUROPÄISCHE PATENTSCHRIFT

(11) **EP 3 565 499 B1**
(45) Veröffentlichungstag und Bekanntmachung des Hinweises auf die Patenterteilung: **03.02.2021**
(21) Anmeldenummer: 17816617.9
(22) Anmeldetag: 06.12.2017
(51) Int. Cl.: A61C 3/025

(54) **KANÜLE FÜR EIN MEDIZINISCHES BEHANDLUNGSINSTRUMENT ZUR ABGABE EINES ABRASIVEN STRÖMUNGSMEDIUMS, SOWIE MEDIZINISCHES BEHANDLUNGSINSTRUMENT**
CANNULA FOR A MEDICAL TREATMENT INSTRUMENT FOR DISPENSING AN ABRASIVE FLOWING MEDIUM, AND MEDICAL TREATING INSTRUMENT
CANULE POUR UN INSTRUMENT DE TRAITEMENT MÉDICAL DESTINÉE À LA DISTRIBUTION D'UN FLUIDE ABRASIF ET INSTRUMENT DE TRAITEMENT MÉDICAL

(30) Priorität: 04.01.2017 EP 17150218
(43) Veröffentlichungstag der Anmeldung: 13.11.2019
(73) Patentinhaber: KaVo Dental GmbH, 88400 Biberach (DE)
(72) Erfinder: WIEK, Hans-Dieter, 88454 Hochdorf (DE); SCHLEKER, Julia, 89584 Ehingen (DE)
(74) Vertreter: Thun, Clemens
(86) Internationale Anmeldenummer: PCT/EP2017/081642
(87) Internationale Veröffentlichungsnummer: WO 2018/127346

(56) Entgegenhaltungen:
- EP-A1- 0 072 487
- EP-A1- 0 958 792
- WO-A1-03/084423
- FR-A- 999 800
- JP-A- H11 104 149

## Beschreibung

Die Erfindung betrifft eine Kanüle nach Anspruch 1 zur Verwendung mit einem medizinischen, insbesondere einem zahnmedizinischen Behandlungsinstrument, welches zur Abgabe eines abrasiven Strömungsmediums ausgebildet ist. Außerdem betrifft die Erfindung ein entsprechendes medizinisches Behandlungsinstrument nach Anspruch 6 mit einer solchen Kanüle.

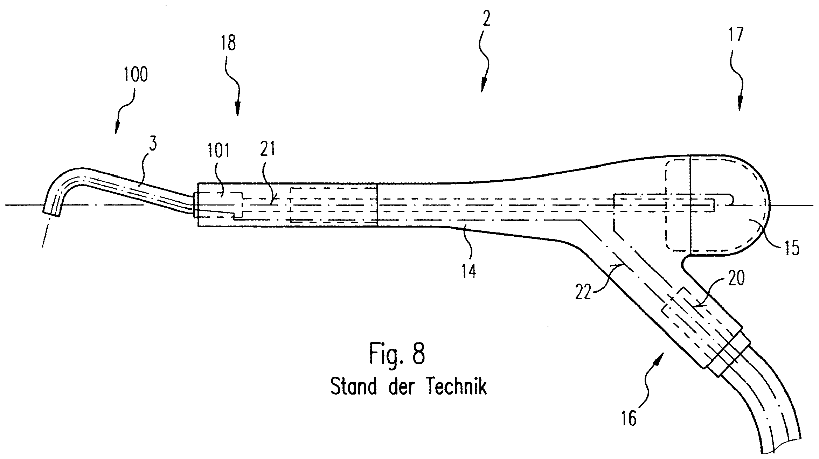

Aus dem Stand der Technik ist ein, in Fig. 8 skizziertes, entsprechendes zahnmedizinisches Behandlungsinstrument 2 in Form eines so genannten Pulverstrahlgeräts bekannt. Das Behandlungsinstrument 2 umfasst ein Handstück 14 und ist insgesamt länglich, so dass es ein rückwärtiges Ende 17 und ein vorderes Ende 18 aufweist. Am vorderen Ende 18 ist eine Kanüle 100 angeordnet. Hierzu weist die Kanüle 100 eine Kanülenbasis 101 auf, mit der sie in eine, am vorderen Ende des Handstücks 14 ausgebildete, korrespondierende Aufnahmeöffnung eingesetzt ist. Am rückwärtigen Ende 17 des Behandlungsinstruments 2 weist dieses weiterhin einen Kupplungsanschluss 16 auf. Mit dem Behandlungsinstrument 2 lässt sich ein abrasives Strömungsmedium über eine Auslassöffnung der Kanüle 100 mit hohem Druck abgeben. Dies kann dazu verwendet werden, eine Oberflächenbeschichtung auf einem Zahn abzutragen.

Das Behandlungsinstrument 2 umfasst weiterhin einen Vorratsbehälter 15 für ein abrasives Behandlungsmittel in Form eines abrasiven Pulvers, sowie eine Druckluftleitung 20, die in den Vorratsbehälter 15 hinein führt und dort mündet. Bei einer Druckluftströmung durch die Druckluftleitung 20 strömt die Druckluft in den Vorratsbehälter 15 und wirbelt dort das Pulver auf; auf diese Weise wird das abrasive Strömungsmedium gebildet. In der Folge wird das Strömungsmedium über eine weitere Leitung 21 in die Kanüle 100 geleitet, die es schließlich mit erhöhter Strömungsgeschwindigkeit über deren Auslassöffnung verlässt.

Die Auslassöffnung umfasst dabei sowohl eine zentrale Auslassöffnung, über die das Strömungsmedium wie oben beschrieben abgegeben wird, sowie mehrere radial um die zentrale Auslassöffnung herum angeordnete Wasserdüsen. Über diese wird gleichzeitig mit dem abrasiven Strömungsmedium Wasser - ebenfalls mit Überdruck - abgegeben. Hierzu weist das Behandlungsinstrument eine Wasserleitung 22 auf, die in den genannten Wasserdüsen endet. Das über die Wasserdüsen abgegebene Wasser bildet sozusagen einen Wassermantel um den zentralen Luft-Pulver-Strahl, der durch das abrasive Strömungsmedium gebildet wird. Dennoch kommt es in der Praxis dazu, dass Luft-Pulver-Strahlen an der zu behandelnden Zahnoberfläche abprallen und quasi "Sekundärstrahlen" bilden. Diese können ein Umfeld der behandelten Oberfläche verschmutzen. In der Praxis betrifft dies eine Umgebung in einem Radius von 80 cm oder gar mehr. Außerdem kann es im Funktionsbetrieb des Behandlungsinstruments dazu kommen, dass im Bereich der Auslassöffnung Nebel, bestehend aus Druckluft, Pulver und Wasser entsteht.

Aus EP 0 958 792 A1 ist eine Kanüle zur Verwendung mit einem medizinischen Behandlungsinstrument bekannt, welches zur Abgabe eines abrasiven Strömungsmediums ausgebildet ist, wobei die Kanüle an einem vorderen Ende des Behandlungsinstruments angeordnet ist und ein Kanülenkörper eine Auslassöffnung für das abrasive Strömungsmedium aufweist. Der Kanülenkörper weist ein Innenrohr und ein, das Innenrohr umgebendes Außenrohr auf, wobei sich an einem vorderen Endbereich des Kanülenkörpers das Außenrohr mit einem überstehenden Teil über das Innenrohr hinaus erstreckt.

Der Erfindung liegt die Aufgabe zugrunde, eine Kanüle für ein entsprechendes medizinisches Behandlungsinstrument zu verbessern. Insbesondere soll dabei die Gefahr einer unerwünschten Verschmutzung des Behandlungsumfelds verringert werden. Außerdem soll ein entsprechendes Behandlungsinstrument angegeben werden. Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine Kanüle zur Verwendung mit einem medizinischen, insbesondere einem zahnmedizinischen Behandlungsinstrument vorgesehen, welches zur Abgabe eines abrasiven Strömungsmediums ausgebildet ist. Die Kanüle ist an einem vorderen Ende des Behandlungsinstruments angeordnet. Ein Kanülenkörper weist zumindest eine Auslassöffnung für das abrasive Strömungsmedium auf. Dabei weist der Kanülenkörper weiterhin ein Düsenteil auf, das eine Konus-förmige Mischkammer für das Strömungsmedium aufweist.

Durch das Düsenteil lässt sich die Form des Strahls des abgegebenen Strömungsmediums vorteilhaft fokussieren. Auf diese Weise lässt sich die Gefahr einer unerwünschten Verschmutzung des Behandlungsumfelds verringern.

Erfindungsgemäß weist der Kanülenkörper ein Innenrohr und ein, das Innenrohr umgebendes Außenrohr auf, wobei sich an einem vorderen Endbereich des Kanülenkörpers das Außenrohr mit einem überstehenden Teil über das Innenrohr hinaus erstreckt und das Düsenteil durch den überstehenden Teil des Außenrohrs gebildet ist. So lässt sich das Düsenteil herstellungstechnisch besonders vorteilhaft bilden.

Vorzugsweise ist dabei die Auslassöffnung des Kanülenkörpers durch das Außenrohr gebildet. Dies ist weitergehende vorteilhaft mit Bezug auf eine fokussierte Abgabe des Strömungsmediums.

Für eine besonders geeignete Verbindung mit einem Handstück des Behandlungsinstruments weist die Kanüle vorzugsweise außerdem eine Kanülenbasis auf, wobei sich das Innenrohr und das Außenrohr vom vorderen Endbereich des Kanülenkörpers bis zu der Kanülenbasis erstrecken. Dabei ist die Kanülenbasis weiterhin vorzugsweise derart ausgebildet, dass sie sich um einen rückwärtigen Endbereich des Innenrohrs und um einen rückwärtigen Endbereich des Außenrohrs herum erstreckt.

Vorzugsweise ist zwischen dem Innenrohr und dem Außenrohr ein Ringkanal zur Leitung eines weiteren Strömungsmediums, insbesondere zur Leitung von Wasser in die Mischkammer gebildet. Durch die Zuleitung des weiteren Strömungsmediums lässt sich die Form des abgegebenen Strömungsmediums weitergehend vorteilhaft beeinflussen.

Weiterhin vorteilhaft mit Bezug auf die Form des abgegebenen Strömungsmediums ist die Mischkammer derart geformt, dass sie sich zur Auslassöffnung hin verjüngt. Ebenso vorteilhaft hierzu weist die Konus-Form der Mischkammer vorzugsweise einen halben Öffnungswinkel auf, der zwischen 5° und 50° beträgt, vorzugsweise zwischen 7° und 20°. Weiterhin vorteilhaft ist es, wenn die Mischkammer eine, entlang der Achse der Konus-Form gemessene Länge aufweist, die zwischen 1,5 mm und 5 mm beträgt, vorzugsweise zwischen 2 mm und 4 mm.

Weiterhin vorzugsweise kann die Kanüle im Bereich der Auslassöffnung mehrere, durch das Düsenteil gebildete Ansaugkanäle für eine Abschirmluft aufweisen, welche die Auslassöffnung des Kanülenkörpers vorzugsweise gleichmäßig verteilt umgeben.

Durch die Strömung des Strömungsmediums entsteht gemäß dem Venturi-Effekt ein Sog, durch den Luft aus der Umgebung in den Ansaugkanälen gesaugt wird. Auf diese Weise lässt sich eine Abschirmluft erzeugen, die gleichsam einen Mantel um das ausströmende abrasive Strömungsmedium bildet. Durch diesen Mantel werden die Ausbreitung von Sekundärstrahlen und auch eine Ausbildung von Nebel zumindest verringert.

Vorzugsweise weist das Düsenteil außerdem einen, mit der Mischkammer verbundenen, sich entlang einer Längsachse erstreckenden Austrittskanal auf. Dies ist ebenfalls vorteilhaft mit Bezug auf die Formgebung des Strahls. Vorzugsweise weist hierfür der Austrittskanal eine Länge auf, die mindestens so groß ist wie zwei Drittel einer - entlang der Längsachse gemessenen - Länge der Mischkammer, insbesondere mindestens so groß wie die Länge der Mischkammer, besonders bevorzugt mindestens so groß wie das 1,1-Fache der Länge der Mischkammer.

Vorzugsweise ist die Mischkammer - entlang der Längsachse betrachtet - zumindest teilweise, vorzugsweise überwiegend zwischen der Auslassöffnung des Kanülenkörpers und dem zumindest einen Ansaugkanal angeordnet. Dies ist strömungstechnisch vorteilhaft.

Vorzugsweise ist das Düsenteil mit dem Kanülenkörper über eine Schraubverbindung verbunden. Hierdurch lässt sich bei einfacher Handhabungsmöglichkeit eine besonders geeignete sichere Verbindung zwischen dem Kanülenkörper und dem Düsenteil erzielen.

Gemäß einem weiteren Aspekt der Erfindung ist ein medizinisches, insbesondere zahnmedizinisches Behandlungsinstrument vorgesehen, welches zur Abgabe eines abrasiven Strömungsmediums ausgebildet ist. Das Behandlungsinstrument weist ein Handstück auf, einen Vorratsbehälter für das abrasive Behandlungsmittel, einen Kupplungsanschluss für ein Transportfluid, insbesondere Wasser und/oder Luft, und eine Kanüle mit einem Kanülenkörper, der eine Auslassöffnung für das abrasive Strömungsmedium aufweist. Dabei ist die Kanüle anmeldungsgemäß ausgebildet.

Die Erfindung wird im Folgenden anhand von Ausführungsbeispielen und mit Bezug auf die Zeichnungen näher erläutert. Es zeigen:
- Fig. 1: eine Querschnittskizze einer anmeldungsgemäßen Kanüle,
- Fig. 2: eine perspektivische Skizze der Kanüle,
- Fig. 3: eine Skizze zu einem weiteren Ausführungsbeispiel einer Kanüle,
- Fig. 4: eine vergrößerte Darstellung aus Fig. 3 im Bereich des Düsenteils der Kanüle,
- Fig. 5: eine Skizze einer Zentrierscheibe der Kanüle,
- Fig. 6: eine Querschnittskizze durch einen vorderen Endbereich der Kanüle gemäß einem weiteren Beispiel,
- Fig. 7: eine Freihandskizze eines Querschnitts durch das Mantelelement der in Fig. 6 gezeigten Kanüle und
- Fig. 8: eine Skizze zu einem Behandlungsinstrument gemäß dem Stand der Technik.

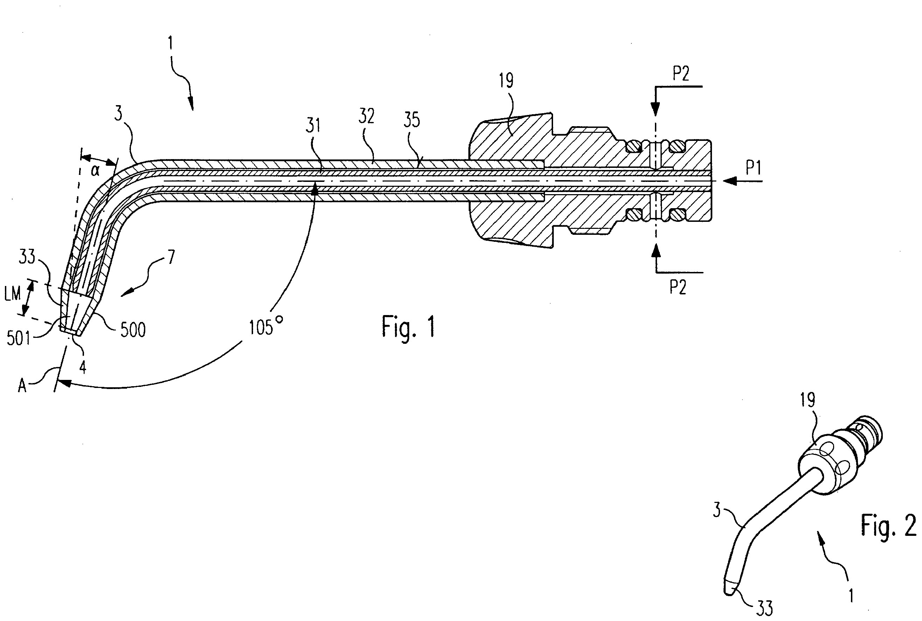

Fig. 1 zeigt eine Querschnittskizze einer anmeldungsgemäßen Kanüle 1, Fig. 2 eine entsprechende perspektivische Skizze. Die Kanüle 1 ist zur Verwendung mit einem medizinischen, insbesondere einem zahnmedizinischen Behandlungsinstrument gestaltet. Soweit im Folgenden nicht anders dargestellt, kann das Behandlungsinstrument so gestaltet sein, wie das in Fig. 8 gezeigte und eingangs beschriebene Behandlungsinstrument 2.

Bei dem Behandlungsinstrument 2 handelt es sich somit um ein medizinisches, insbesondere zahnmedizinisches Behandlungsinstrument 2 zur Abgabe eines abrasiven Strömungsmediums; beispielsweise kann es sich bei dem Behandlungsinstrument 2 um ein Pulverstrahlgerät handeln. Das Behandlungsinstrument 2 umfasst ein Handstück 14 und einen Vorratsbehälter 15 für ein abrasives Behandlungsmittel. Bei Letzterem kann es sich insbesondere um ein Pulver handeln. Weiter umfasst das Behandlungsinstrument 2 einen Kupplungsanschluss 16 für ein Transportfluid, insbesondere Wasser und/oder Luft. Die Kanüle 1 zur Verwendung mit dem Behandlungsinstrument 2 unterscheidet sich von der in Fig. 8 gezeigten Kanüle 100 wie im Folgenden näher ausgeführt.

Das Behandlungsinstrument 2 ist insgesamt länglich, so dass es ein rückwärtiges Ende 17 und ein vorderes Ende 18 aufweist, wobei beim gezeigten Beispiel der Vorratsbehälter 15 und der Kupplungsanschluss 16 am rückwärtigen Ende 17 des Behandlungsinstruments 2 angeordnet sind und die Kanüle 1 an dem vorderen Ende 18 des Behandlungsinstruments 2 angeordnet ist.

Vorzugsweise weist das Behandlungsinstrument 2 eine, mit dem Kupplungsanschluss 16 verbundene Leitung 20 für das Transportfluid auf, die in den Vorratsbehälter 15 führt und dort mündet. Beispielsweise kann es sich bei dem Transportfluid um Druckluft handeln. Wenn die Druckluft in den Vorratsbehälter 15 einströmt, wirbelt sie das dort befindliche abrasive Behandlungsmittel bzw. das Pulver auf. So entsteht ein Gemisch, das das abrasive Strömungsmedium bildet. Weiterhin umfasst das Behandlungsinstrument 2 insbesondere eine weitere Leitung 21, die von dem Vorratsbehälter 15 zu dem vorderen Ende 18 des Behandlungsinstruments 2 führt und dort - wie in Fig. 1 mit einem Pfeil P1 angedeutet - für das abrasive Strömungsmedium leitend mit der Kanüle 1 verbunden ist.

Die Kanüle 1 ist dazu ausgestaltet, an dem vorderen Ende 18 des Behandlungsinstruments 2 bzw. des Handstücks 14 angeordnet zu werden. Insbesondere kann die Kanüle 1 hierfür eine Kanülenbasis 19 aufweisen. Insbesondere ist die Kanülenbasis 19 dabei dazu ausgestaltet, in eine entsprechend korrespondierende Aufnahmeöffnung des Handstücks 14 eingesetzt zu werden, die hierfür am vorderen Ende des Handstücks 14 ausgebildet ist.

Beim hier gezeigten Ausführungsbeispiel umfasst die Kanüle 1 einen Kanülenkörper 3, der zumindest eine Auslassöffnung 4 für das abrasive Strömungsmedium aufweist. Weiterhin umfasst der Kanülenkörper 3 ein Düsenteil 500, das eine Konus-förmige Mischkammer 501 für das Strömungsmedium aufweist. Durch das Düsenteil 500 lässt sich die Form des Strahls des abgegebenen Strömungsmediums vorteilhaft fokussieren. Insbesondere lässt sich auf diese Weise die Gefahr einer unerwünschten Verschmutzung des Behandlungsumfelds verringern.

Der Kanülenkörper 3 weist vorzugsweise ein Innenrohr 31 und ein, das Innenrohr umgebendes Außenrohr 32 auf, wobei sich an einem vorderen Endbereich 7 des Kanülenkörpers 3 das Außenrohr 32 mit einem überstehenden Teil 33 über das Innenrohr 31 hinaus erstreckt und das Düsenteil 500 durch den überstehenden Teil 33 des Außenrohrs 32 gebildet ist. Die Auslassöffnung 4 ist hier also durch das Außenrohr 32, insbesondere durch dessen überstehenden Teil 33 gebildet.

Die weitere Leitung 21 des Behandlungsinstruments 2 ist dabei insbesondere mit dem Innenbereich des Innenrohrs 31 für das abrasive Strömungsmedium leitend verbunden.

Vorzugsweise erstreckt sich sowohl das Innenrohr 31, als auch das Außenrohr 32 vom vorderen Endbereich 7 des Kanülenkörpers 3 bis zur Kanülenbasis 19. Die Kanülenbasis 19 ist vorzugsweise derart gestaltet, dass sie sich um einen rückwärtigen Endbereich des Innenrohrs 31 und um einen rückwärtigen Endbereich des Außenrohrs 32 herum erstreckt.

Vorzugsweise ist zwischen dem Innenrohr 31 und dem Außenrohr 32 ein Ringkanal 35 zur Leitung eines weiteren Strömungsmediums, insbesondere zur Leitung von Wasser in die Mischkammer 501 gebildet ist. Dabei weist das Behandlungsinstrument 2 in diesem Fall vorzugsweise eine weitere Leitung 22 für das weitere Strömungsmedium auf, wobei - wie in Fig. 1 mit Pfeilen P2 angedeutet - die weitere Leitung 22 über die Kanülenbasis 19 für das weitere Strömungsmedium leitend mit dem Ringkanal verbunden ist.

Vorzugsweise ist die Mischkammer 501 derart geformt, dass sie sich zur Auslassöffnung 4 hin verjüngt. Hierdurch lässt sich die Form des abgegebenen Strömungsmediums besonders effektiv vorteilhaft beeinflussen.

Vorzugsweise weist die Konus-Form der Mischkammer 501 einen halben Öffnungswinkel α auf, der zwischen 5° und 50° beträgt, insbesondere zwischen 7° und 20°. Beim gezeigten Ausführungsbeispiel beträgt der halbe Öffnungswinkel 10° ± 2°.

Vorzugsweise weist die Mischkammer 501 eine, entlang der Achse A der Konus-Form gemessene Länge LM auf, die zwischen 1,5 mm und 5 mm beträgt, vorzugsweise zwischen 2 mm und 4 mm.

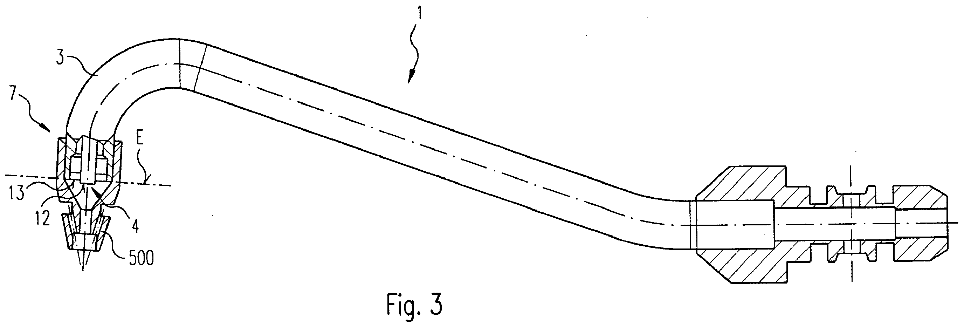

In den Figuren 3 bis 5 ist ein weiteres Ausführungsbeispiel einer Kanüle skizziert. Soweit nicht anders angegeben, ist die Ausgestaltung bei diesem Ausführungsbeispiel analog zum zuerst genannten Ausführungsbeispiel. Dabei sind die Bezugszeichen, soweit verwendet, analog gebraucht.

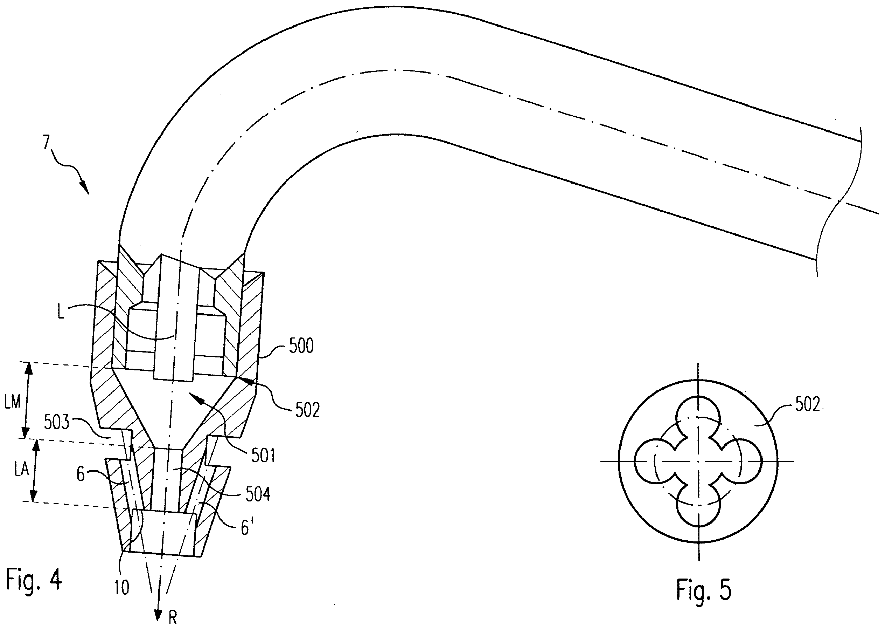

Fig. 3 zeigt die Kanüle 1; in Fig. 4 ist ein Bereich um den Endbereich 7 des Kanülenkörpers 3 vergrößert skizziert. Bei dieser Ausgestaltung weist die Kanüle 1 ein Düsenteil 500 auf, durch das zumindest ein Ansaugkanal 6 bzw. 6, 6' für eine Abschirmluft gebildet ist.

Wenn im Funktionsbetrieb des Behandlungsinstruments 2 das abrasive Strömungsmedium mit Überdruck über die Auslassöffnung 4 nach außen strömt, bildet sich durch den zumindest einen Ansaugkanal 6, 6' aufgrund des Venturi-Effekts eine Sogwirkung aus, die dazu führt, dass Luft aus der Umgebung angesaugt wird, und zwar in den zumindest einen Ansaugkanal 6, 6' hinein. In der Folge bildet diese Luft eine Abschirmluft in Form eines "Luftmantels" oder kurz Mantels um den Strom des aus der Auslassöffnung 4 austretenden Strömungsmediums. Durch diesen Mantel lassen sich ungewollte Sekundärstrahlen reduzieren; auch die Wahrscheinlichkeit für die Entstehung eines Nebels lässt sich so verringern. In der Folge ist die Verschmutzungsgefahr reduziert und die Sicht auf einen Behandlungsbereich ist verbessert.

Vorzugsweise ist das Düsenteil 500 bei diesem Beispiel mit dem Kanülenkörper 3 über eine Schraubverbindung verbunden. Insbesondere kann die Gestaltung derart sein, dass das Düsenteil 500 auf den Kanülenkörper 3, insbesondere den Endbereich 7 des Kanülenkörpers 3 aufgeschraubt werden kann.

Das Düsenteil 500 weist vorzugsweise eine insbesondere Konus-förmige bzw. kegelförmige Mischkammer 501 auf.

Weiterhin vorzugsweise weist das Düsenteil 500 einen, mit der Mischkammer 501 für das Strömungsmedium leitend verbundenen, insbesondere unmittelbar verbundenen Austrittskanal 504 auf. Dabei ist der Austrittskanal 504 insbesondere in der für das Strömungsmedium vorgesehenen Strömungsrichtung der Mischkammer 501 nachgeordnet ausgebildet.

Vorzugsweise ist der Austrittskanal 504 länglich, insbesondere zylinderförmig länglich, so dass er eine Länge LA aufweist. Dabei erstreckt er sich mit seiner Längsachse insbesondere entlang bzw. parallel zur Längsachse L. Beispielsweise kann der Austrittskanal 504 derart gestaltet sein, dass er einen - senkrecht zu seiner Längserstreckung gemessenen - Durchmesser aufweist, der kleiner ist als die Hälfte seiner Länge LA, vorzugsweise kleiner als ein Drittel seiner Länge LA.

Durch die Formgebung der Mischkammer 501 und die Länge LA des Austrittskanals 504 lässt sich das Austrittsverhalten des Strömungsmediums aus dem Düsenteil 500 beeinflussen. Unterstützt wird dieser Effekt durch den Luftmantel, der sich durch den Venturi-Effekt bildet und der das Strömungsmedium gegenüber der Umgebung eindämmt.

Je flacher der Kegel der Konus-Form der Mischkammer 501 gestaltet ist, also je kleiner der Öffnungswinkel der Kegel-Form ist, desto gerichteter tritt der durch das Strömungsmedium gebildete Strahl aus. Beispielsweise kann die Gestaltung derart sein, dass in einem Schnitt entlang der Längsachse L betrachtet der Winkel zwischen der konischen Innenwand der Mischkammer 501 und der Längsachse L - also der halbe Öffnungswinkel des entsprechenden Kegels - zwischen 20° und 60° beträgt, vorzugsweise zwischen 30° und 50°.

Je größer die Länge LA des Austrittskanals 504, desto besser die Strahlführung. Dies ist vorteilhaft, weil hierdurch ein besonders präzises Arbeiten mit dem Behandlungsinstrument ermöglicht ist. Vorzugsweise ist die Länge LA des Austrittskanals 504 mindestens so groß wie zwei Drittel einer - entlang der Längsachse L gemessenen - Länge LM der Mischkammer 501, vorzugsweise mindestens so groß wie die Länge LM der Mischkammer 501, besonders bevorzugt mindestens so groß wie das 1,1-Fache der Länge LM der Mischkammer 501. Dies ist besonders vorteilhaft mit Bezug auf die Formgebung des Strahls.

Die Mischkammer 501 ist weiterhin vorzugsweise - entlang der Längsachse L betrachtet - zumindest teilweise, insbesondere überwiegend zwischen der Auslassöffnung 4 des Kanülenkörpers 3 und dem zumindest einen Ansaugkanal 6 angeordnet.

Der zumindest eine Ansaugkanal 6, 6' ist vorzugsweise - entlang der Längsachse L betrachtet - zumindest überwiegend außerhalb desjenigen Längsabschnitts gebildet, der durch die Mischkammer 501 festgelegt ist und vorzugsweise überlappend mit demjenigen Längsabschnitt, der durch den Austrittskanal 504 festgelegt ist. Dies ist beispielhaft so in Fig. 4 skizziert.

Beim gezeigten Beispiel umfasst die Auslassöffnung 4 des Kanülenkörpers 3 eine zentrale Auslassöffnung 12 und zumindest eine weitere Öffnung 13. Dabei ist die Auslassöffnung 4 durch ein Innenrohr und ein Außenrohr des Kanülenkörpers 3 gebildet, wobei die zentrale Auslassöffnung 12 durch das Innenrohr gebildet ist und die zumindest eine weitere Öffnung 13 zwischen dem Innenrohr und dem Außenrohr gebildet ist.

Dabei kann weiterhin eine Zentrierscheibe 502 vorgesehen sein, die in Fig. 5 in separierter Form normal zu der Längsachse L betrachtet skizziert ist, durch die das Innenrohr gegenüber dem Außenrohr fixiert ist.

Der zumindest eine Ansaugkanal 6, 6' ist beim gezeigten Beispiel gegenüber der Längsachse L geneigt gestaltet, derart, dass sich das vordere Ende 10 des Ansaugkanals 6 näher an der Längsachse L befindet als das rückseitige Ende 11. Beispielsweise kann die Gestaltung derart sein, dass der Winkel zwischen der Hauptachse des Ansaugkanals 6 und der Längsachse L zwischen 2° und 30° beträgt.

Wenn mehrere Ansaugkanäle 6, 6' vorgesehen sind, sind diese vorzugsweise mit Bezug auf die Längsachse L symmetrisch geformt.

Für einen besonders geeigneten Eintritt der Umgebungsluft in den zumindest einen Ansaugkanal 9 kann das Düsenteil 500 eine ringförmige Ausnehmung 503 aufweisen, die sich kreisförmig um die Längsachse L herum erstreckt. Die ringförmige Ausnehmung kann sich dabei insbesondere - entlang der Längsachse L betrachtet - strömungstechnisch vorteilhaft einerseits in denjenigen Längsabschnitt erstrecken, der durch die Mischkammer 501 festgelegt ist und andererseits in denjenigen Längsabschnitt, der durch den Austrittskanal 504 festgelegt ist.

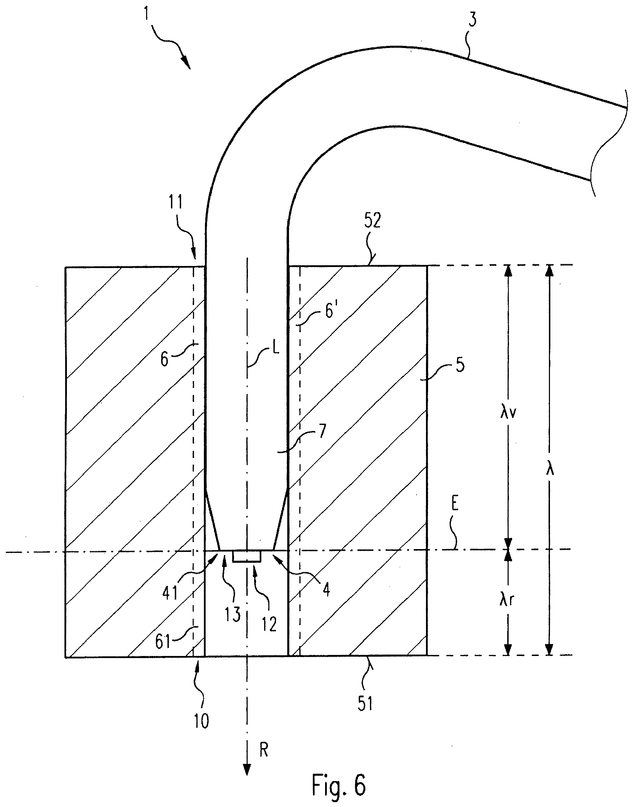

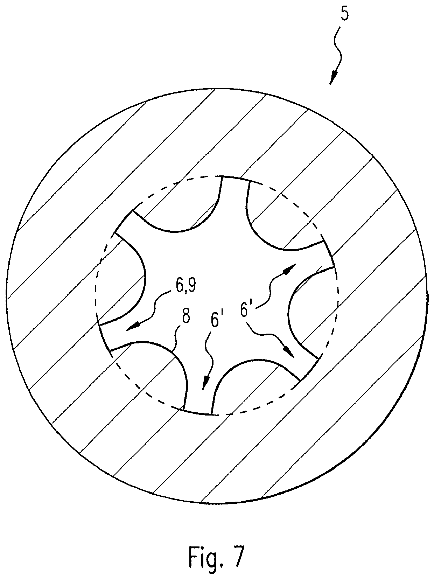

In den Figuren 6 und 7 ist ein weiteres Beispiel einer Kanüle dargestellt. Bei diesem Beispiel lässt sich eine Abschirmluft zur Beeinflussung des abgegebenen Strömungsmediums realisieren. Durch eine solche Abschirmluft lässt sich insbesondere eine geeignete räumliche Begrenzung des abgegebenen Strömungsmediums erzielen, und zwar auch dann, wenn der Kanülenkörper kein entsprechendes Düsenteil mit einer Konus-förmigen Mischkammer aufweist.

Bei diesem Beispiel umfasst die Kanüle 1 ein rohrförmiges Mantelelement 5. In Fig. 6 ist ein schematischer Querschnitt durch einen Bereich der Kanüle 1 skizziert, in dem sich das Mantelelement 5 befindet.

Der Kanülenkörper 3 weist eine Auslassöffnung 4 für das abrasive Strömungsmedium auf. Vorzugsweise ist die Auslassöffnung 4 an einem Endbereich 7 des Kanülenkörpers 3 gebildet. Im gezeigten Beispiel weist der Kanülenkörper 3 außerdem einen, dem Endbereich 7 gegenüberliegenden weiteren Endbereich auf, der mit der weiteren Leitung 21 verbunden ist.

Das Mantelelement 5 ist im Bereich der Auslassöffnung 4 angeordnet und weist einen Ansaugkanal 6 für eine Abschirmluft auf. Wie im gezeigten Beispiel der Fall, ist das Mantelelement 5 vorzugsweise durch ein auf den Endbereich 7 des Kanülenkörpers 3 aufsetzbares separates Bauteil gebildet. Alternativ kann das Mantelelement 5 beispielsweise einstückig mit dem Kanülenkörper 3 gestaltet sein.

Im gezeigten Beispiel erstreckt sich der Endbereich 7 des Kanülenkörpers 3 entlang einer Längsachse L. Die Auslassöffnung 4 weist dabei einen Randbereich 41 auf, der in einer Ebene E liegt, die normal zu der Längsachse L orientiert ist. Durch die Auslassöffnung 4 des Kanülenkörpers 3 ist eine Abgaberichtung R für das abrasive Strömungsmedium definiert, die hier parallel zu der Längsachse L orientiert ist.

Das Mantelelement 5 weist einen, in die Abgaberichtung R weisenden vorderen Endbereich 51 auf, sowie auf der entgegen gesetzten Seite einen rückwärtigen Endbereich 52. Der vordere Endbereich 51 kann durch eine plane Fläche gebildet sein, die in einer normal zu der Längsachse L orientierten Ebene liegt; analoges gilt mit Bezug auf den rückwärtigen Endbereich 52. Vorzugsweise kann das Mantelelement 5 profilartig gestaltet sein, wobei die Profilachse insbesondere mit der Längsachse L zusammenfällt.

Wie in Fig. 6 skizziert, ist die Gestaltung vorzugsweise derart, dass das Mantelelement 5 die Auslassöffnung 4 bzw. kurz den Auslass 4 des Kanülenkörpers 3 überragt; dementsprechend erstreckt sich das Mantelelement 5 insbesondere in Abgaberichtung R bzw. nach vorne über die Auslassöffnung 4 bzw. die Ebene E hinaus.

Beispielsweise kann vorgesehen sein, dass das Mantelelement 5 entlang der Längsachse L betrachtet eine Längserstreckung λ aufweist, wobei das Mantelelement 5 die Ebene E um ein Maß λv nach vorne bzw. in Abgaberichtung R überragt und wobei gilt, dass λv zwischen 10% und 50% der gesamten Längserstreckung λ beträgt. In diesem Fall erstreckt sich das Mantelelement 5 "hinter" der Ebene E um ein Maß λr = λ - λv, das hier zwischen 50% und 90% der Längserstreckung λ beträgt.

Besonders geeignet kann das Mantelelement 5 aus einem flexiblen oder festen Material bestehen, insbesondere aus einem Elastomer. Beispielsweise kann es durch ein schlauchartiges Mantelelement oder einen Schlauch bzw. Sachlauchabschnitt gebildet sein.

Fig. 7 zeigt eine schematische Skizze eines normal zu der Längsachse L gelegten Querschnitts durch das Mantelelement 5 der Kanüle 1. Strömungstechnisch vorteilhaft ist der Ansaugkanal 6 durch eine in einer Innenwandung 8 des Mantelelements 5 ausgebildeten Aussparung 9 gebildet.

Vorzugsweise ist zumindest ein vorderer Endbereich 61 des Ansaugkanals 6 im Wesentlichen parallel zu der Abgaberichtung R ausgerichtet. Insbesondere kann die Gestaltung strömungstechnisch besonders vorteilhaft derart sein, dass sich der Ansaugkanal 6 bzw. die Aussparung 9 über die gesamte Länge λ des Mantelelements 5 hinweg erstreckt, insbesondere profilartig, so dass sich der Ansaugkanal 6 über seine gesamte Länge, die hier gleich der Länge λ ist, geradlinig und parallel zu der Längsachse L erstreckt.

Insbesondere kann der Ansaugkanal 6 - mit Bezug auf die Abgaberichtung R - ein vorderes Ende 10 und ein rückseitiges Ende 11 aufweisen. Dabei ist das vordere Ende 10 vorzugsweise im Bereich der Auslassöffnung 4 des Kanülenkörpers 3 angeordnet. Dementsprechend ist in diesem Fall das vordere Ende 10 näher an der Auslassöffnung 4 angeordnet als das rückseitige Ende 11 des Ansaugkanals 6. Hierdurch lassen sich besonders geeignete Strömungsverhältnisse erzielen.

Weiterhin mit Bezug auf die Strömungsverhältnisse vorteilhaft ist vorzugsweise vorgesehen, dass die Kanüle 1 zumindest einen weiteren Ansaugkanal 6' aufweist, der insbesondere analog zu dem zuerst genannten Ansaugkanal 6 gebildet ist. In diesem Fall sind also mehrere, beispielsweise mehr als drei, vorzugsweise mehr als vier Ansaugkanäle 6, 6' ausgebildet, welche die Auslassöffnung 4 des Kanülenkörpers 3 vorzugsweise gleichmäßig verteilt umgeben.

Vorzugsweise weist der Kanülenkörper 3 eine zentrale Auslassöffnung 12 zur Abgabe eines Luft-Pulver-Gemisches sowie zumindest eine radial außerhalb der zentralen Auslassöffnung 12 angeordnete weitere Öffnung 13 zur Abgabe eines weiteren Strömungsmediums, insbesondere Wasser, auf, wobei der zumindest eine Ansaugkanal 6 radial außerhalb der weiteren Öffnung 13 angeordnet ist. Die oben erwähnte Auslassöffnung 4 kann also in diesem Fall die zentrale Auslassöffnung 12 und die zumindest eine weitere Öffnung 13 aufweisen bzw. aus diesen bestehen.

Dementsprechend weist das Behandlungsinstrument 2 in diesem Fall vorzugsweise eine weitere Leitung 22 für das weitere Strömungsmedium auf, die sich insbesondere von dem Kupplungsanschluss 16 zu der Auslassöffnung 4 erstreckt.

Diese Ausgestaltung ist besonders vorteilhaft, weil sich durch das weitere Strömungsmedium bzw. das Wasser gleichsam ein innerer Mantel bilden lässt, der bereits eine Abschirmfunktion für das Luft-Pulver-Gemisch erfüllt, das aus der zentralen Auslassöffnung 12 austritt. In Verbindung mit dem zuerst genannten, durch die Abschirmluft gebildeten Mantel lässt sich dann eine besonders effektive Abschirmung bewirken.

## Patentansprüche

1. Kanüle (1) zur Verwendung mit einem medizinischen, insbesondere einem zahnmedizinischen Behandlungsinstrument (2), welches zur Abgabe eines abrasiven Strömungsmediums ausgebildet ist,
wobei die Kanüle (1) an einem vorderen Ende (18) des Behandlungsinstruments (2) angeordnet ist und ein Kanülenkörper (3) zumindest eine Auslassöffnung (4) für das abrasive Strömungsmedium aufweist,
wobei der Kanülenkörper (3) ein Innenrohr (31) und ein, das Innenrohr umgebendes Außenrohr (32) aufweist, wobei sich an einem vorderen Endbereich (7) des Kanülenkörpers (3) das Außenrohr (32) mit einem überstehenden Teil (33) über das Innenrohr (31) hinaus erstreckt und durch den überstehenden Teil (33) des Außenrohrs (32) ein Düsenteil (500) gebildet ist,
wobei das Düsenteil (500) eine Konus-förmige Mischkammer (501) für das Strömungsmedium aufweist, welche derart geformt ist, dass sie sich zur Auslassöffnung (4) hin verjüngt,
wobei eine Kanülenbasis (19) vorgesehen ist zur Verbindung der Kanüle mit einem Handstück (14) des Behandlungsinstruments (2), wobei sich das Innenrohr (31) und das Außenrohr (32) vom vorderen Endbereich (7) des Kanülenkörpers (3) bis zu der Kanülenbasis (19) erstrecken,
wobei die Kanülenbasis (19) sich um einen rückwärtigen Endbereich des Innenrohrs (31) und um einen rückwärtigen Endbereich des Außenrohrs (32) herum erstreckend ausgebildet ist.

2. Kanüle nach Anspruch 1,
**dadurch gekennzeichnet,**
**dass** die Auslassöffnung (4) durch den überstehenden Teil (33) des Außenrohrs (32) gebildet ist.

3. Kanüle nach Anspruch 1 oder 2,
**dadurch gekennzeichnet,**
**dass** zwischen dem Innenrohr (31) und dem Außenrohr (32) ein Ringkanal (35) zur Leitung eines weiteren Strömungsmediums, insbesondere zur Leitung von Wasser in die Mischkammer (501) gebildet ist.

4. Kanüle nach einem der vorhergehenden Ansprüche,
**dadurch gekennzeichnet,**
**dass** die Konus-Form der Mischkammer (501) einen halben Öffnungswinkel (α) aufweist, der zwischen 5° und 50° beträgt, vorzugsweise zwischen 7° und 20°.

5. Kanüle nach einem der vorhergehenden Ansprüche,
**dadurch gekennzeichnet,**
**dass** die Mischkammer (501) eine, entlang der Achse (A) der Konus-Form gemessene Länge (LM) aufweist, die zwischen 1,5 mm und 5 mm beträgt, vorzugsweise zwischen 2 mm und 4 mm.

6. Medizinisches, insbesondere zahnmedizinisches Behandlungsinstrument (2), welches zur Abgabe eines abrasiven Strömungsmediums ausgebildet ist, mit
• einem Handstück (14),
• einem Vorratsbehälter (15) für das abrasive Behandlungsmittel,
• einem Kupplungsanschluss (16) für ein Transportfluid, insbesondere Wasser und/oder Luft, und
• einer Kanüle (1) mit einem Kanülenkörper (3), der eine Auslassöffnung (4) für das abrasive Strömungsmedium aufweist,
**dadurch gekennzeichnet,**
**dass** die Kanüle (1) gemäß einem der vorherigen Ansprüche ausgebildet ist.

7. Medizinisches, insbesondere zahnmedizinisches Behandlungsinstrument (2) nach Anspruch 6,
**dadurch gekennzeichnet,**
**dass** dieses eine mit dem Kupplungsanschluss (16) verbundene Leitung (20) für das Transportfluid aufweist, welche in den Vorratsbehälter (15) mündet, sowie eine von dem Vorratsbehälter (15) zu einem vorderen Ende (18) des Behandlungsinstruments (2) führende weitere Leitung (21), die für das abrasive Strömungsmedium eitend mit der Kanüle (1) verbunden ist.

8. Medizinisches, insbesondere zahnmedizinisches Behandlungsinstrument (2) nach Anspruch 7,
**dadurch gekennzeichnet,**
**dass** die weitere Leitung (21) mit dem Innenbereich des Innenrohrs (31) für das abrasive Strömungsmedium eitend verbunden ist.

9. Medizinisches, insbesondere zahnmedizinisches Behandlungsinstrument (2) nach Anspruch 8,
**dadurch gekennzeichnet,**
**dass** es sich bei dem Transportfluid, welches durch die Leitungen (20, 21) strömt, um Druckluft handelt.

10. Medizinisches, insbesondere zahnmedizinisches Behandlungsinstrument (2) nach einem der Ansprüche 6 bis 9,
**dadurch gekennzeichnet,**
**dass** dieses nochmals eine weitere Leitung (22) für ein weiteres Strömungsmedium aufweist, welche leitend mit dem Ringkanal der Kanüle (1) verbunden ist.

11. Medizinisches, insbesondere zahnmedizinisches Behandlungsinstrument (2) nach Anspruch 10,
**dadurch gekennzeichnet,**
**dass** es sich bei dem weiteren Strömungsmedium um Wasser handelt.

12. Medizinisches, insbesondere zahnmedizinisches Behandlungsinstrument (2) nach einem der Ansprüche 6 bis 11,
**dadurch gekennzeichnet,**
**dass** dieses eine zu der Kanülenbasis (19) korrespondierende Aufnahmeöffnung aufweist.

## Claims

1. Cannula (1) for use with a medical, in particular a dental, treatment instrument (2) which is designed to dispense an abrasive flow medium,
wherein the cannula (1) is arranged at a front end (18) of the treatment instrument (2), and a cannula body (3) has at least one outlet opening (4) for the abrasive flow medium,
wherein the cannula body (3) has an inner tube (31) and, surrounding the inner tube, an outer tube (32), wherein, at a front end region (7) of the cannula body (3), the outer tube (32) extends with a protruding part (33) beyond the inner tube (31) and a nozzle part (500) is formed by the protruding part (33) of the outer tube (32),
wherein the nozzle part (500) has a conical mixing chamber (501) for the flow medium, which mixing chamber (501) is shaped such that it tapers towards the outlet opening (4),
wherein a cannula base (19) is provided for connecting the cannula to a handpiece (14) of the treatment instrument (2), wherein the inner tube (31) and the outer tube (32) extend from the front end region (7) of the cannula body (3) to the cannula base (19),
wherein the cannula base (19) is designed extending around a rear end region of the inner tube (31) and around a rear end region of the outer tube (32).

2. Cannula according to Claim 1, **characterized in that** the outlet opening (4) is formed by the protruding part (33) of the outer tube (32).

3. Cannula according to Claim 1 or 2, **characterized in that** an annular channel (35) for conveying a further flow medium, in particular for conveying water, into the mixing chamber (501) is formed between the inner tube (31) and the outer tube (32).

4. Cannula according to one of the preceding claims, **characterized in that** the cone shape of the mixing chamber (501) has a half opening angle (α) of between 5° and 50°, preferably of between 7° and 20°.

5. Cannula according to one of the preceding claims, **characterized in that** the mixing chamber (501) has a length (LM), measured along the axis (A) of the cone shape, of between 1.5 mm and 5 mm, preferably of between 2 mm and 4 mm.

6. Medical, in particular dental, treatment instrument (2) designed to dispense an abrasive flow medium, having
• a handpiece (14),
• a reservoir (15) for the abrasive treatment agent,
• a coupling port (16) for a transport fluid, in particular water and/or air, and
• a cannula (1) with a cannula body (3) that has an outlet opening (4) for the abrasive flow medium,
**characterized in that** the cannula (1) is designed according to one of the preceding claims.

7. Medical, in particular dental, treatment instrument (2) according to Claim 6, **characterized in that** it has a conduit (20) for the transport fluid, which conduit (20) is connected to the coupling port (16) and opens into the reservoir (15), and a further conduit (21) which leads from the reservoir (15) to a front end (18) of the treatment instrument (2) and which is connected to the cannula (1) so as to convey the abrasive flow medium.

8. Medical, in particular dental, treatment instrument (2) according to Claim 7, **characterized in that** the further conduit (21) is connected to the inner region of the inner tube (31) so as to convey the abrasive flow medium.

9. Medical, in particular dental, treatment instrument (2) according to Claim 8, **characterized in that** the transport fluid that flows through the conduits (20, 21) is compressed air.

10. Medical, in particular dental, treatment instrument (2) according to one of Claims 6 to 9, **characterized in that** it has yet another conduit (22) for a further flow medium, which conduit (22) is conductively connected to the annular channel of the cannula (1).

11. Medical, in particular dental, treatment instrument (2) according to Claim 10, **characterized in that** the further flow medium is water.

12. Medical, in particular dental, treatment instrument (2) according to one of Claims 6 to 11, **characterized in that** it has a receiving opening corresponding to the cannula base (19).

## Revendications

1. Canule (1) destinée à être utilisée avec un instrument de traitement (2) à usage médical, en particulier à usage dentaire, qui est conçu pour délivrer un fluide abrasif,
la canule (1) étant disposée à une extrémité avant (18) de l'instrument de traitement (2) et un corps de canule (3) comportant au moins une ouverture de sortie (4) destinée au fluide abrasif,
le corps de canule (3) comportant un tube intérieur (31) et un tube extérieur (32) qui entoure le tube intérieur, le tube extérieur (32) s'étendant au niveau de la région d'extrémité avant (7) du corps de canule (3) et comportant une partie saillante (33) allant au-delà du tube intérieur (31) et une partie formant buse (500) étant formée par la partie saillante (33) du tube extérieur (32),
la partie formant buse (500) comportant une chambre de mélange (501) en forme de cône qui est destinée au fluide et qui est formée de façon à se rétrécir en direction de l'ouverture de sortie (4),
une base de canule (19) étant prévue pour relier la canule à une pièce à main (14) de l'instrument de traitement (2), le tube intérieur (31) et le tube extérieur (32) s'étendant de la région d'extrémité avant (7) du corps de canule (3) à la base de canule (19), la base de canule (19) étant conçue de manière à s'étendre autour d'une région d'extrémité arrière du tube intérieur (31) et autour d'une région d'extrémité arrière du tube extérieur (32) .

2. Canule selon la revendication 1,
**caractérisée en ce que**
l'ouverture de sortie (4) est formée par la partie saillante (33) du tube extérieur (32).

3. Canule selon la revendication 1 ou 2,
**caractérisée en ce que**
un conduit annulaire (35) est formé entre le tube intérieur (31) et le tube extérieur (32) pour conduire un autre fluide, en particulier pour conduire de l'eau jusque dans la chambre de mélange (501).

4. Canule selon l'une des revendications précédentes,
**caractérisée en ce que**
la forme conique de la chambre de mélange (501) forme un demi-angle d'ouverture (α) qui est compris entre 5° et 50°, de préférence entre 7° et 20°.

5. Canule selon l'une des revendications précédentes,
**caractérisée en ce que**
la chambre de mélange (501) a une longueur (LM), mesurée le long de l'axe (A) de la forme conique, qui est comprise entre 1,5 mm et 5 mm, de préférence entre 2 mm et 4 mm.

6. Instrument de traitement (2) à usage médical, en particulier à usage dentaire, conçu pour délivrer un fluide abrasif et comprenant
• une pièce à main (14),
• un réservoir (15) destiné à l'agent de traitement abrasif,
• un raccord d'accouplement (16) destiné à un fluide de transport, en particulier de l'eau et/ou de l'air, et
• une canule (1) pourvue d'un corps de canule (3) qui comporte une ouverture de sortie (4) destinée au fluide abrasif,
**caractérisé en ce que**
la canule (1) est conçue selon l'une des revendications précédentes.

7. Instrument de traitement (2) à usage médical, en particulier à usage dentaire, selon la revendication 6,
**caractérisé en ce que**
celui-ci comporte un conduit (20) relié au raccord d'accouplement (16), destiné au fluide de transport et débouchant dans le réservoir (15), et un autre conduit (21) allant du réservoir (15) à une extrémité avant (18) de l'instrument de traitement (2) et relié à la canule de manière à conduire le fluide abrasif (1).

8. Instrument de traitement (2) à usage médical, en particulier à usage dentaire, selon la revendication 7,
**caractérisé en ce que**
l'autre conduit (21) est relié à la région intérieure du tube intérieur (31) de manière à conduire le fluide abrasif.

9. Instrument de traitement (2) à usage médical, en particulier à usage dentaire, selon la revendication 8,
**caractérisé en ce que**
le fluide de transport qui s'écoule à travers les conduits (20, 21) est de l'air comprimé.

10. Instrument de traitement (2) à usage médical, en particulier à usage dentaire, selon l'une des revendications 6 à 9,
**caractérisé en ce que**
celui-ci comporte encore un autre conduit (22) destiné à un autre fluide et relié de manière conductrice au conduit annulaire de la canule (1).

11. Instrument de traitement (2) à usage médical, en particulier à usage dentaire, selon la revendication 10,
**caractérisé en ce que**
l'autre fluide est de l'eau.

12. Instrument de traitement (2) à usage médical, en particulier à usage dentaire, selon l'une des revendications 6 à 11,
**caractérisé en ce que**
celui-ci comporte une ouverture de réception correspondant à la base de canule (19).
